# EUROPÄISCHE PATENTSCHRIFT

(11) **EP 0 635 631 B1**
(45) Veröffentlichungstag und Bekanntmachung des Hinweises auf die Patenterteilung: **01.10.1997**
(21) Anmeldenummer: 94108363.6
(22) Anmeldetag: 31.05.1994
(51) Int. Cl.: F02F 1/38, F02F 1/42, F01L 1/04

(54) **Zylinderkopfanordnung einer Brennkraftmaschine**
Cylinder head arrangement for an internal combustion engine
Agencement d'une culasse d'un moteur à combustion interne

(30) Priorität: 23.07.1993 DE 4324791
(43) Veröffentlichungstag der Anmeldung: 25.01.1995
(73) Patentinhaber: Dr.Ing.h.c. F. Porsche Aktiengesellschaft, 70435 Stuttgart (DE)
(72) Erfinder: Distelrath, Winfried, D-70499 Stuttgart (DE); Hauf, Roland, D-71229 Leonberg (DE); Esch, Hans-Joachim, Dr., D-71296 Heimsheim (DE); Koller, Gerhard, D-71254 Ditzingen (DE)

(56) Entgegenhaltungen:
- EP-A- 0 146 254
- GB-A- 1 093 861
- US-A- 5 150 675

## Beschreibung

Die Erfindung betrifft eine Zylinderkopfanordnung gemäß dem Oberbegriff des Patentanspruches 1 (siehe US-A-5 150 675).

In dem DE-Buch "Formel 1-Motoren unter der Lupe", 1. Auflage 1985, ist auf Seite 165 eine gattungsgemäße Brennkraftmaschine mit einem mehrteiligen Zylinderkopf offenbart, dessen auf den Zylinderblock aufgesetztes Grundgehäuse die Gaswechselkanäle und die Ventile trägt. Dieses Grundgehäuse weist auf der vom Zylinderblock abgewandten Seite hochgezogene Außenwände mit einem außen umlaufenden Flansch auf, zwischen welchen Lagerleisten mit den Unterteilen von Nockenwellenlagern in das Gehäuse eingelegt sind. Auf diese Leisten sind vereinzelte Lageroberteile aufgeschraubt. Überdeckt wird dieses Grundgehäuse von einem Zylinderkopfdeckel, welcher dachförmig die Lageroberteile übergreift und auf den Flansch geschraubt ist. Dieser Zylinderkopf weist somit eine einzige, gegenüber der Umgebung abzudichtende Trennebene auf.

Aus dem Volvo Service Manual Nr. TP 317 14/2, Seite 11, ist für den Motor Typ B6304 ein Zylinderkopf bekannt, in welchem das zuvor beschriebene Grundgehäuse einstückig mit den Unterteilen von Nockenwellenlagern ausgebildet ist. An die einzige Trennebene dieses Zylinderkopfes grenzt ein die Lageroberteile tragender Zylinderkopfdeckel.

Zur Erzielung eines optimalen, insbesondere brennraumseitig hochfesten Werkstoffgefüges, ist es wünschenswert, dieses durch ein weitgehend hinterschneidungsfreies Gußverfahren zu erzielen, wie es beispielsweise mit dem gattungsbildenden Stand der Technik möglich ist. Der dadurch bedingt mehrteilig ausgeführte Zylinderkopf leidet infolge einer nicht ausreichenden Steifigkeit häuftig unter Ölverlusten an der oder den Trennebenen.

Der Efindung liegt daher die Aufgabe zugrunde, eine gattungsgemäße Zylinderkopfanordnung dahingehend zu verbessern, daß sowohl ein hochfestes Werkstoffgefüge erzielbar ist wie auch eine hohe Gesamtsteifigkeit im montierten Zustand.

Die Lösung dieser Aufgabe gelingt mit den Merkmalen des Patentanspruches 1.

Weitere, vorteilhafte Ausgestaltungen der Erfindung sind in den abhängigen Ansprüchen gekennzeichnet.

Wenn bei einer derartigen Anordnung die Lageroberteile einstückig mit dem Zylinderkopfdeckel ausgebildet sind und dieser eine Flanschfläche aufweist, an welche sowohl Außenwände des Grundgehäuses wie auch Gegenflächen des Lagergehäuses grenzen, so ist einerseits die Anzahl der zu verbindenden Teile auf drei reduziert, Grundgehäuse, Lagergehäuse und Deckel, wodurch die Gesamtsteifigkeit des montierten Kopfes erhöht ist, andererseits ist die Möglichkeit eines optimalen Gußverfahrens, insbesondere für das den Brennraum tragende Grundgehäuse gegeben. Zusätzlich kann die Bauhöhe gering gehalten werden, da keine zusätzliche Haube über die Nockenwellenlagerung gelegt wird.
Die gemeinsame Anlage der Außenwände und der Gegenfläche des Lagergehäuses an der Flanschfläche des Zylinderkopfdeckels stellt für das vom Ventiltrieb abgeschleuderte Öl eine Reihenschaltung von zwei Engstellen dar, so daß ein Ölaustritt mit vergleichsweise einfachen Mitteln zu verhindern ist.

In vorteilhafter Ausgestaltung weist diese Anordnung eine einzige Trennebene auf, in der die Flanschfläche liegt und an die das Grundgehäuse, das Nockenwellengehäuse und der Zylinderkopfdeckel grenzt. Hierdurch ergibt sich bei Fertigung und Montage eine einzige Ebene, die maschinell bearbeitet werden muß und eine einzige definierte Bezugsebene für die erforderliche Verschraubung und den daraus resultierenden Pressungen und möglichen Verformungen.

Von einer Mittellängsebene aus sind beiderseits dazu in zueinander parallelen Ebenen Verschraubungen angeordnet, wobei eine erste das Lagergehäuse zwischen Zylinderkopfdeckel und Grundgehäuse verspannt, eine zweite das Lagergehäuse am Grundgehäuse, eine dritte den Zylinderkopfdeckel am Nockenwellengehäuse hält und eine vierte das Grundgehäuse mit dem Zylinderkopfdeckel verbindet.

Die ersten, zweiten und dritten Verschraubungen durchsetzen die Trennebene und sind durch den Zylinderkopfdeckel gesteckt, an welchem sie sich abstützen. Die vierten Verschraubungen verspannen das Lagergehäuse im Bereich zwischen zwei benachbarten Aufnahmen für Tassenstößel gegen das Grundgehäuse, während fünfte Verschraubungen das Grundgehäuse am Zylinderblock halten.
Mittig oberhalb jedes Zylinders der Brennkraftmaschine ist ein Schacht zur Aufnahme einer Zündkerze oder eine Einspritzvorrichtung für Kraftstoff angeordnet. Diese Schächte sind zwischen Grundgehäuse und Lagergehäuse geteilt und weisen zur Sicherstellung einer guten Abdichtung benachbart zu den Schächten angeordnete sechste Verschraubungen auf.
Diese Anordnung der Verschraubungen gewährleistet eine eindeutige und einwandfreie Montage und Zugänglichkeit. Dabei wird zunächst das Grundgehäuse mittels einer Verschraubung am Zylinderblock befestigt. Die Lage und Anzahl dieser Verschraubung ist aufgrund der freien Zugänglichkeit unbeschränkt. Anschließend wird das Lagergehäuse mittels zweier Verschraubungen mit einer Stützfläche des Grundgehäuses verbunden. Die Lage von diese Verschraubungen aufnehmenden Ebenen ist so angeordnet, daß durch die Ventilbetätigung in das Lagergehäuse eingeleitete Kräfte nur äußerst geringe Durchbiegungen dieses Gehäuses zur Folge haben. In der Trennebene können dann in einer Aufspannung die in dieser Ebene liegenden Flächen bearbeitet werden. Danach wird der Zylinderkopfdeckel aufgesetzt und mittels dreier Verschraubungen mit den übrigen Teilen verbunden, so daß die Lager für die Nockenwellen gebohrt werden können. Abschließend werden die Nockenwellen eingelegt und der Zylinderkopfdeckel erneut aufgesetzt. Aufgrund der in der Trennebene liegenden, vergleichsweise großen Auflagefläche des Zylinderkopfdeckels auf dem Lagergehäuse bzw. den Außenwänden des Grundgehäuses und einer relativ breiten Auflagerbasis des Lagergehäuses an diesem Grundgehäuse ist ein steifer Verbund der beteiligten Bauteile gegeben.

Die Erfindung wird nachfolgend anhand einer Zeichnung beispielhaft näher erläutert.

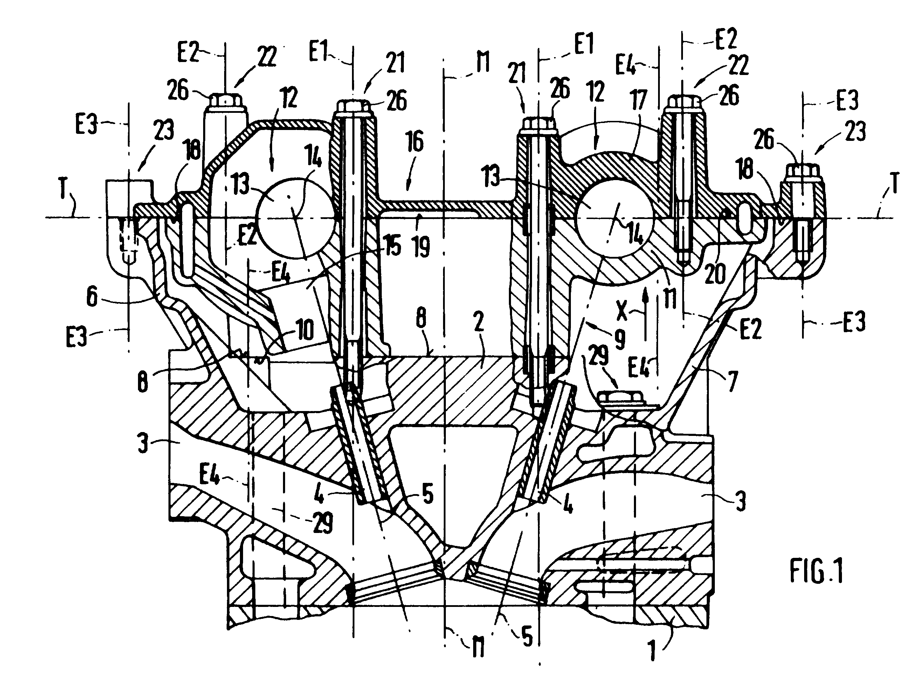

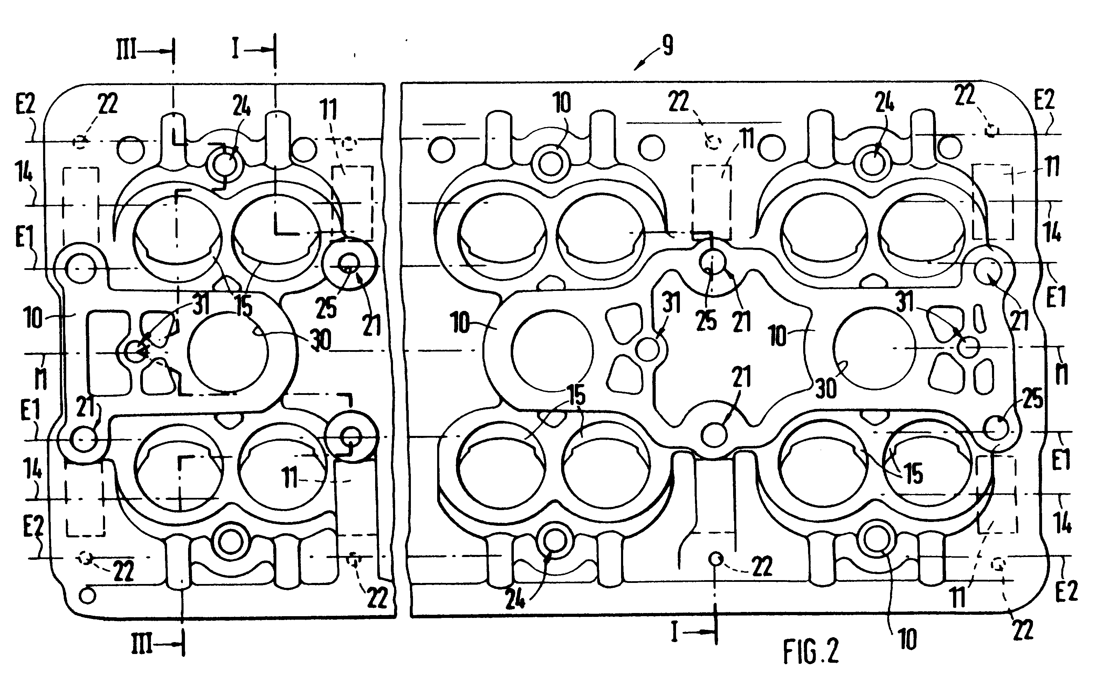

Es zeigen
- Fig. 1: einen Querschnitt durch eine Zylinderkopfanordnung, teilweise entlang der Linie I-I gemäß Fig. 2,
- Fig. 2: eine Ansicht von unten auf ein Lagergehäuse in Richtung des Pfeiles X gemäß Fig. 1 und

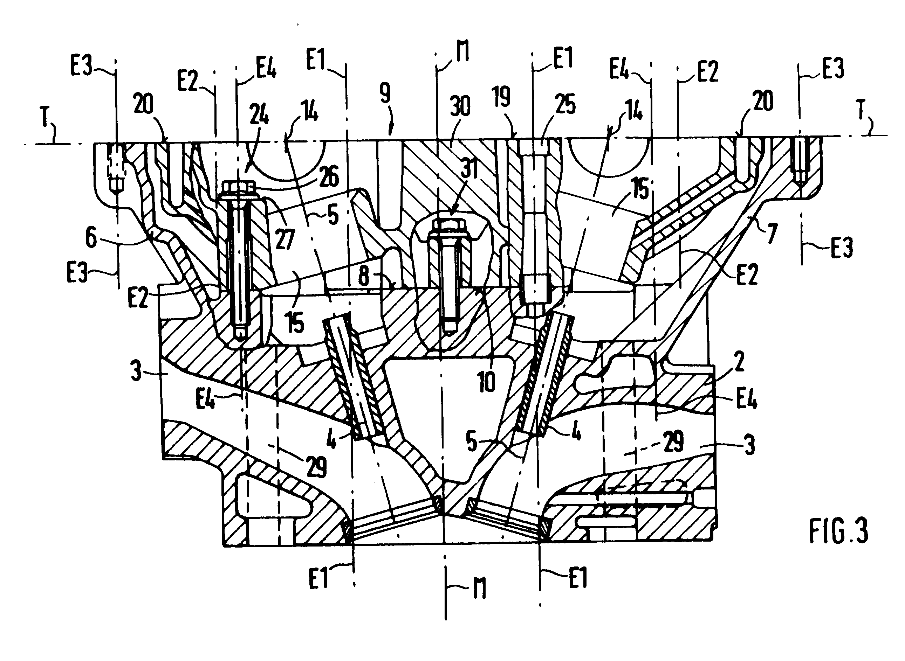

- Fig. 3: einen weiteren Querschnitt durch eine Zylinderkopfanordnung, teilweise entlang der Linie III-III gemäß Fig. 2.

Eine Brennkraftmaschine weist eine auf einen Zylinderblock 1 aufgesetzte Zylinderkopfanordnung auf, deren Grundgehäuse 2 Gaswechselkanäle 3 und Führungen 4 für Tellerventile trägt, welche sich entlang von schräg zu einer Mittellängsebene M-M angeordneten Achsen 5 bewegen.
Das Grundgehäuse 2 weist Außenwände 6,7 auf, welche gegenüber einer im Bereich der Mittellängsebene M-M angeordneten Stützfläche 8 bis zu einer Trennebene T-T der Zylinderkopfanordnung hochgezogen sind. In dem durch diese Trennebene T-T, die Außenwände 6,7 und die Stützfläche 8 begrenzten Raum ist ein Lagergehäuse 9 angeordnet, welches mittels einer Anlagefläche 10 auf der Stützfläche 8 anliegt. Das Lagergehäuse 9 weist Lagerunterteile 11 von Nockenwellenlagern 12, in welchen Nockenwellen 13 um ihre Längsachsen 14 rotieren sowie Aufnahmen 15 für Tassenstößel auf.

Auf die Trennebene T-T ist ein Zylinderkopfdeckel 16 gesetzt, welcher korrespondierende Lageroberteile 17 trägt. An eine außen umlaufende, in der Trennebene T-T liegende Flanschfläche 18 des Zylinderkopfdeckels 16 grenzen sowohl die Außenwände 6,7 wie auch eine auf einer Oberseite 19 des Lagergehäuses 9 ausgebildete Gegenfläche 20.
Beiderseits der Mittellängsebene M-M verlaufen dazu parallele Ebenen E1, E2, E3 und E4, in welchem sich erste, zweite, dritte und vierte Verschraubungen 21, 22, 23, und 24 erstrecken. Die Verschraubungen 21 bis 23 durchsetzen Durchgangsöffnungen 25 des Zylinderkopfdeckels 16 und stützen sich mit Schraubenköpfen 26 auf diesem ab.
Die ersten und zweiten Verschraubungen 21 und 22 greifen mit Gewinden in die Stützfläche 8 ein, wobei die erste 21 dabei das Lagergehäuse 9 durchsetzt und dieses zwischen Zylinderkopfdeckel 16 und Grundgehäuse 2 verspannt, während sich die Schraubenköpfe 26 der zweiten Verschraubungen 22 auf zwischen den paarweise zusammengefassten Aufnahmen 15 angeordneten Anschlägen 27 abstützen. Die dritten Verschraubungen 23 greifen im Bereich der Lagerunterteile 11 in das Lagergehäuse 9 und vierte 24 in die Außenwände 6,7 ein.
Die Längsachsen 14 erstrecken sich zwischen der ersten und der zweiten Ebene E1 und E2, während die Gegenflächen 20 zwischen der zweiten und der dritten Ebene E2 und E3 angeordnet sind.

Das Grundgehäuse 2 ist mittels fünfter Verschraubungen 29 am Zylinderblock 1 gehalten.
Oberhalb der einzelnen Zylinder der Brennkraftmaschine sind Schächte 30 angeordnet, welche zwischen Stützfläche 8 und Anlagefläche 10 geteilt sind. Benachbart dieser eine nicht gezeigte Einspritzvorrichtung für Kraftstoff aufnehmenden Schächte 30 sind sechste Verschraubungen 31 angeordnet, welche eng benachbart zur Mittellängsebene M-M die im Lagergehäuse 9 bzw. im Grundgehäuse 2 ausgebildeten Teile dieser Schächte 30 miteinander verbinden.

## Patentansprüche

1. Zylinderkopfanordnung einer Brennkraftmaschine,
mit einem Gaswechselkanäle (3) und diese steuernden Ventile aufweisenden, auf einen Zylinderblock aufgesetzten Grundgehäuse (2),
einem Lagergehäuse (9) zur Lagerung mindestens einer Nockenwelle (13), wobei dieses Lagergehäuse (9) zumindest einstückig mit ihm ausgebildete Lagerunterteile (11) der Nockenwelle (13) aufweist,
mit einem Zylinderkopfdeckel (16), wobei
Lageroberteile (17) der Nockenwellenlager (12) einstückig mit dem Zylinderkopfdeckel (16) ausgebildet sind, dadurch gekennzeichnet, daß der Zylinderkopfdeckel (16) eine Flanschfläche (18) aufweist, an die sowohl Außenwände (6, 7) des Grundgehäuses (2) wie auch Gegenflächen (20) des Lagergehäuses (9) grenzen.

2. Anordnung nach Anspruch 1, **dadurch gekennzeichnet**, daß sie eine einzige Trennebene (T-T) aufweist, an welche das Grundgehäuse (2), das Lagergehäuse (9) und der Zylinderkopfdeckel (16) grenzen und in der die Flanschfläche (18) liegt.

3. Anordnung nach Anspruch 2, **dadurch gekennzeichnet**, daß von einer Mittellängsebene (M-M) ausgehend beiderseits in dazu parallelen Ebenen (E1, E2, E3) Verschraubungen (21,22,23) angeordnet sind, wobei sich in der Trennebene (T-T) verlaufende Längsachsen (14) der Nockenwellen (13) zwischen den ersten und den zweiten Ebenen (E1, E2) erstrecken.

4. Anordnung nach Anspruch 3, **dadurch gekennzeichnet**, daß erste, zweite und dritte Verschraubungen (21, 22 und 23) den Zylinderkopfdeckel (16) durchsetzend einerseits an diesem abgestützt sind, andererseits die ersten und dritten Verschraubungen (21 und 23) im Grundgehäuse (2) und die zweiten (22) im Lagergehäuse (9) abgestützt sind.

5. Anordnung nach Anspruch 3, **dadurch gekennzeichnet**, daß die Gegenflächen (20) des Lagergehäuses (19) zwischen der zweiten und der dritten Ebene (E2 und E3) angeordnet sind.

6. Anordnung nach Anspruch 3, **dadurch gekennzeichnet**, daß in einer vierten parallelen Ebene (E4) angeordnete vierte Verschraubungen (24) das Lagergehäuse (9) benachbart von Aufnahmen (15) für Tassenstößel am Grundgehäuse (2) halten.

7. Anordnung nach Anspruch 6, **dadurch gekennzeichnet**, daß Längsachsen (14) der Nockenwellen (13) zwischen der ersten und vierten Ebene (E1 und E4) angeordnet verlaufen.

## Claims

1. A cylinder-head arrangement of an internal-combustion engine, with a base housing (2) which comprises gas-exchange ducts (3) and valves controlling them and which is mounted on a cylinder block, and with a bearing housing (9) for mounting at least one camshaft (13), wherein the said bearing housing (9) comprises at least lower bearing parts (11) of the camshaft (13) formed integrally therewith, and with a cylinder-head cover (16), wherein the upper parts (17) of the camshaft bearing (12) are integral with the cylinder-head cover (16), **characterized in that** the cylinder-head cover (16) has a flanged face (18) bounded by both the outer walls (6, 7) of the base housing (2) and the matching faces (20) of the bearing housing (9).

2. An arrangement according to Claim 1, **characterized in that** it has a single separation plane (**T-T**) which is bounded by the base housing (2), the bearing housing (9) and the cylinder-head cover (16) and in which the flanged face (18) is situated.

3. An arrangement according to Claim 2, **characterized in that** starting from a median longitudinal plane (**M-M**) bolt fastenings (21, 22, 23) are arranged on both sides in planes **(E1, E2, E3)** parallel thereto, wherein longitudinal axes (14) of the camshafts (13) extending in the separation plane (T-T) extend between the first and the second plane (**E1, E2**).

4. An arrangement according to Claim 3, **characterized in that** first, second and third bolt fastenings (21, 22 and 23) are supported at one end on the cylinder-head cover (16) while passing therethrough, and the first and third bolt fastenings (21 and 23) are supported at the other end in the base housing (2) and the second bolt fastenings (22) are supported at the other end in the bearing housing (9).

5. An arrangement according to Claim 3, characterized **in** that the matching surfaces (20) of the bearing housing (19) are arranged between the second and the third plane (**E2** and **E3**).

6. An arrangement according to Claim 3, characterized in that fourth bolt fastenings (24) arranged in a fourth parallel plane (**E4**) hold the bearing housing (9) adjacent to receiving means (15) for flat tappets on the base housing (2).

7. An arrangement according to Claim 6, **characterized in that** longitudinal axes (14) of the camshafts (13) are arranged to extend between the first and the fourth plane (**E1** and **E4**).

## Revendications

1. Agencement d'une culasse d'un moteur à combustion interne, avec des canaux de passage de gaz (3) et un carter de base (2) présentant les soupapes destinées à la commande et appliquées sur un bloc cylindre,
un carter palier (9) destiné au montage de tourbillonnement d'au moins un arbre à came (13), ce carter palier (9) présentant des parties inférieures de palier (11) de l'arbre à came (13), réalisées au moins d'une seule pièce avec lui,
avec un couvercle de culasse (16),
les parties supérieures de palier (17) des paliers d'arbres à came (12) étant réalisées d'une seule pièce avec le couvercle de culasse (16), caractérisé en ce que le couvercle de culasse (16) présente une surface de bridage (18) à laquelle se limitent tant des parois extérieures (6, 7) du carter de base (2), qu'également des surfaces conjuguées (20) du carter de palier (9).

2. Agencement selon la revendication 1, caractérisé en ce qu'il présente un plan de séparation (T-T) unique, auquel se délimitent le carter de base (2), le carter de palier (9) et le couvercle de culasse (16) et dans lequel est située la surface de bridage (18).

3. Agencement selon la revendication 2, caractérisé en ce que, en partant d'un plan longitudinal médian (M-M), de part et d'autre, dans des plans (E1, E2, E3) lui étant parallèles sont disposés des vissages (21, 22, 23), les axes longitudinaux (14), s'étendant dans le plan de séparation (T-T), des arbres à came (13) s'étendant entre les premier et les deuxième plans (E1, E2).

4. Agencement selon la revendication 3, caractérisé en ce que des premiers, deuxièmes et troisièmes vissages (21, 22 et 23) sont soutenus d'un côté sur le couvercle de culasse (16) en traversant celui-ci, d'autre part les premiers et troisièmes vissages (21; 23) sont soutenus dans le corps de base (2) et les deuxièmes vissages (22) sont soutenus dans le carter de palier (9).

5. Agencement selon la revendication 3, caractérisé en ce que les surfaces conjuguées (20) du carter de palier (19) sont disposées entre le deuxième plan et le troisième plan (E2 et E3).

6. Agencement selon la revendication 3, caractérisé en ce que des quatrièmes vissages (24), disposés dans un quatrième plan (E4) parallèle, maintiennent le carter de palier (9) au voisinage de logement (5) destiné à des poussoirs en tasse, sur le corps de base (2).

7. Agencement selon la revendication 6, caractérisé en ce que les axes longitudinaux (14) des arbres à came (13) s'étendent entre les premier et quatrième plans (E1 et E4).
